# EUROPÄISCHE PATENTSCHRIFT

(11) **EP 1 398 232 B1**
(45) Veröffentlichungstag und Bekanntmachung des Hinweises auf die Patenterteilung: **25.01.2006**
(21) Anmeldenummer: 03019580.4
(22) Anmeldetag: 03.09.2003
(51) Int. Cl.: B60S 9/08

(54) **Anordnung eines Motors an einer Stützwinde**
Motor mounting for supporting jacks
Montage du moteur pour des bras de support

(30) Priorität: 06.09.2002 DE 10241905
(43) Veröffentlichungstag der Anmeldung: 17.03.2004
(73) Patentinhaber: Jost-Werke GmbH & Co. KG, 60528 Frankfurt am Main (DE)
(72) Erfinder: Algüera, José, 63739 Aschaffenburg (DE); Richter, Martin, 60316 Frankfurt am Main (DE); Eiermann, Michael, 64319 Pfungstadt (DE)
(74) Vertreter: Fuchs Mehler Weiss & Fritzsche

(56) Entgegenhaltungen:
- DE-A- 19 836 635
- US-A- 3 784 160
- US-A- 4 129 322

## Beschreibung

Die Erfindung betrifft eine Anordnung eines Motors an paarweise montierten Stützwinden, insbesondere an einem Auflieger eines Sattelzuges, wobei die Stützwinden über eine Verbindungswelle miteinander verbunden und durch Inbetriebnahme des Motors teleskopierbar sind, wobei der Motor mit seiner Antriebswelle an der Verbindungswelle angreift und sich an einer relativ zum Motor ortsfesten Komponente abstützt.

Nach dem Auf- und Absatteln des Aufliegers werden die Stützwinden teleskopiert, das heißt ein- bzw. ausgefahren, und stützen den stehenden Auflieger ab. Das Ein- und Ausfahren wird üblicherweise über eine an einer der Stützwinden angebrachte Handkurbel vom Fahrer vorgenommen. Um den Fahrer von dieser kürperlich anstrengenden Arbeit zu entlasten, gibt es Bestrebungen, die Antriebskraft zum Ein- und Ausfahren der Stützwinden durch einen Motor aufzubringen.

Eine derartige Anbringung eines Motors an einer Stützwinde offenbart die EP 0 179 632, wobei der Motor von außen an einer der Stützwinden anstelle der Handkurbel an eine Getriebeeingangswelle des Stützwindengetriebes angebaut ist. Der wesentliche Nachteil der bekannten motorbetriebenen Stützwinde liegt darin, dass der Motor außerhalb der Stützwinde in einem ungeschützten Bereich angebracht ist und in der Praxis häufig beschädigt wird. Ein weiterer Nachteil besteht darin, dass der Motor für einen Lastgang und einen Schnellgang der Stützwinde ausgelegt sein muss, was motorseitig erheblichen konstruktiven Aufwand durch die Bereitstellung entweder einer Motorsteuerung oder einer zusätzlichen motorseitigen Getriebestufe verursacht.

Einen im Hinblick auf die Erfindung nahen Stand der Technik bildet die US 4,129,322 mit einer Stützvorrichtung für einen Wohnwagen-Auflieger. Die bekannte Stützvorrichtung umfasst zwei Stützbeine, die über eine Verbindungswelle miteinander verbunden sind. In einem mittleren Bereich der Verbindungswelle ist drehfest auf dieser eine Treibscheibe angeordnet, die über einen Riementrieb von einer Antriebswelle eines ortsfest an dem Auflieger befindlichen Motors angetrieben wird. In Abhängigkeit des Drehsinns lassen sich die Stützbeine gleichzeitig absenken oder anheben. Als Nachteil hat sich insbesondere der hohe Verschleiß der bekannten Stützvorrichtung herausgestellt.

Demnach lag der Erfindung die Aufgabe zugrunde, eine Anordnung eines Motors bereitzustellen, die Beschädigungen des Motors minimiert und gleichzeitig kostengünstig herstellbar ist.

Erfindungsgemäß wird die Aufgabe mit einer Anordnung gelöst, bei der zwischen Motor und ortsfester Komponente ein Federelement angeordnet ist.

Das Federelement verhindert eine Beschädigung des Motors, wenn die Stützwinde gegen ihren oberen oder unteren Anschlag fährt, während der Motor, bedingt durch seine Schwungmasse, noch nachläuft. Durch die Elastizität des Federelementes wird eine stoßartige Belastung, insbesondere beim Fahren gegen den oberen harten Anschlag aber auch beim Anfahren von dem Motor ferngehalten. Dieses erhöht die Lebensdauer des Motors und lässt darüber hinaus auch den Einsatz preiswerter Motoren zu.

Durch das Abstützen des Motors an einer ortsfesten Komponente wird ein Mitdrehen des Motors wirksam verhindert und dadurch ein Drehen der Verbindungswelle realisiert.

Aufgrund der Positionierung des Motors an der Verbindungswelle wird die Problematik der Motorabstimmung mit dem meistens zweistufigen Getriebes der Stützwinde dahingehend gelöst, dass der Motor im Kraftfluss hinter dem Getriebe angeordnet ist. Dadurch bedingt können wiederum handelsübliche, einfach aufgebaute Motoren Verwendung finden.

Ein weiterer Vorteil der erfinderischen Anordnung resultiert daraus, dass der Motor in einem geschützten Bereich zwischen den Stützwinden, bei Aufliegern unterhalb des Aufliegerbodens, angebracht ist und dadurch im Fahrbetrieb kaum beschädigt werden kann.

Darüber hinaus brauchen für eine Nachrüstung keine Änderungen an den Stützwinden vorgenommen zu werden, bzw. können herstellerseitig die gleichen Bauteile für verschiedene Stützwindentypen verwendet werden.

Vorzugsweise umfasst das Federelement eine Spiralfeder, insbesondere eine Schraubenfeder, ein Torsionselement oder einen Stoßdämpfer, wobei die Spiralfeder sowohl in ihrer axialen Erstreckung eingebaut sein kann oder ebenfalls als Torsionselement einsetzbar ist. Unter dem Begriff Stoßdämpfer werden auch Federdämpferpakete verstanden.

Als Torsionselement kommt auch ein elastischer Schlauch oder ein elastisches Rohrstück in Frage.

Vorteilhafterweise ist die ortsfeste Komponente mindestens eine der beiden Stützwinden und hier besonders bevorzugt die Rückseite der Stützwindengegenplatte, an welcher die Stützwinde mit dem Auflieger verschraubt ist.

Günstigerweise ist die Spiralfeder oder das Torsionselement drehfest an mindestens einer der Stützwinden und dem Motor befestigt, so dass beim Fahren der Stützwinde gegen einen Anschlag der gesamte Motor sanft in seiner Drehrichtung abgefangen wird.

Vorzugsweise umgibt die Spiralfeder oder das Torsionselement die Verbindungswelle zumindest teilweise.

Als besonders günstig hat es sich herausgestellt, wenn die Verbindungswelle berührungslos innerhalb der Spiralfeder oder des Torsionselementes angeordnet ist. Dadurch bedingt treten während des Teleskopierens der Stützwinde keine Reibungsverluste zwischen der Verbindungswelle und der Spiralfeder oder des Torsionselementes auf.

In einer alternativen Ausführungsform ist die ortsfeste Komponente die Unterseite eines Aufliegerbodens. Dabei kann beispielsweise die Spiralfeder oder der Stoßdämpfer zwischen dem Motor und der Unterseite des Aufliegerbodens angeordnet sein.

Als vorteilhaft hat es sich erwiesen, wenn die Spiralfeder eine obere und eine untere auf einem Führungsrohr angeordnete und durch jeweils einen Endanschlag an ihrem äußeren Ende fixierbare Teilfeder umfasst, wobei auf dem Führungsrohr zwischen der oberen und unteren Teilfeder eine Befestigungshülse angeordnet ist. Vorzugsweise ist die Befestigungshülse oder der Stoßdämpfer mit dem Motor in einem Anschlagpunkt verbunden. Dieser Anschlagpunkt kann ein Schwenken des Motors gegenüber der Befestigungshülse zulassen. Bei einem Ausfahren der Stützwinde könnte der Motor bedingt durch sein Anfahrmoment beispielsweise über die Befestigungshülse die obere Teilfeder zusammendrücken, wodurch eine stoßartige Belastung von dem Motor und den im Kraftfluss nachgeordneten Komponenten vermieden wird. Bei einer vollständig ausgefahrenen Stützwinde berührt der Stützfuß der Stützwinde den Boden, d.h. die Stützwinde hat ihren unteren Anschlag erreicht. Der Motor dreht jedoch für kurze Zeit aufgrund seiner Schwungmasse nach, so daß erneut die Befestigungshülse gegen die obere Teilfeder drückt und dadurch bedingt eine stoßartige Belastung vermieden wird. Bei einem Einfahren der Stützwinde wird, da der Motor seinen Drehsinn wechselt, dementsprechend sowohl beim Anfahren als auch beim Fahren gegen den oberen Anschlag die untere Teilfeder komprimiert.

Günstigerweise ist das Führungsrohr auf ein Innenrohr aufgeschoben und mit diesem in axialer Richtung in unterschiedlichen Positionen verbindbar. Hiermit ist eine Einstellung und Anpassung des Führungsrohres an die räumlichen Verhältnisse des konkreten Anwendungsfalles möglich, so dass ein optimiertes Zusammenwirken der von den Teilfedern eingespannten Befestigungshülse mit dem im Anschlagpunkt befestigten Motor gewährleistet ist.

Bei den vorstehend beschriebenen Ausführungsformen kann die Verbindungswelle drehfest an der Antriebswelle befestigt sein. Hierdurch ist eine verlustfreie und wartungsfreie Kraftübertragung realisierbar.

Die Aufgabe wird alternativ auch mit einer Anordnung gelöst, bei der zwischen Antriebswelle und Verbindungswelle ein Federelement angeordnet ist. Im Gegensatz zu den vorstehend beschriebenen Ausführungsformen wird hierbei ein elastisches Element unmittelbar in den Kraftfluss zwischen Antriebswelle des Motors und der Verbindungswelle eingebracht.

Als Federelement können hierbei eine Elastikhülse, ein Riementrieb oder eine Rutschkupplung in Frage kommen. Die Elastikhülse ist aus einem elastischen Material gefertigt, wie z. B. Gummi.

Vorteilhafterweise ist die Elastikhülse als Luftkammerhülse ausgebildet. Die Luftkammerhülse umfasst dabei eine an die Außenwandung der Verbindungswelle angepasste innenliegende Umfangswand und eine an die Innenwandung der Antriebswelle angepasste außenliegende Umfangswand, wobei die innenliegende und die außenliegende Umfangswand über radial verlaufende zueinander beabstandete Trennwände miteinander verbunden sind. Zwischen den Trennwänden sind Luftkammern ausgebildet. Durch Aufbringen einer Kraft in Umfangsrichtung wird aufgrund der Materialeigenschaften und der Materialverdrängung ein Dämpfungseffekt bei stoßartig auftretenden Kräften erzielt.

Bei einer besonders bevorzugten Ausführungsform umfasst die ortsfeste Komponente mindestens eine der Stützwinden, einen Aufliegerboden oder einen Fahrzeugträger, wobei die ortsfeste Komponente starr mit dem Motor verbunden ist.

Hieraus resultiert zunächst einmal der Vorteil, daß ein geringerer Bauraum in Anspruch genommen wird, da keine den Motor elastisch abstützenden Federelemente vorhanden sind. Insbesondere der zur Verfügung stehende Raum zwischen der Verbindungswelle und der Unterseite des Aufliegerbodens ist jedoch häufig knapp bemessen. Aufgrund der starren Befestigung des Motors müssen Zulaufleitungen zum Motor nicht beweglich verlegt werden. Ein weiterer Sicherheitsaspekt liegt darin, daß es nach außen keine bewegten Teile gibt. Darüber hinaus werden die Gewichtskräfte des Motors über die feste Montage abgestützt und nicht über die Verbindungswelle in die Lager der Stützwinde übertragen, welche anderenfalls einem höheren Verschleiß unterliegen.

Günstigerweise ist die Elastikhülse drehfest an der Verbindungswelle und der Antriebswelle befestigt. Dieses kann beispielsweise durch Kleben oder Aufvulkanisieren erfolgen.

In einer vorteilhaften Ausführungsform umfasst der Riementrieb einen Treibriemen, welcher ein auf der Antriebswelle drehfest angeordnetes Antriebsrad und ein auf der Verbindungswelle drehfest angeordnetes Abtriebsrad umschlingt.

Hierbei kann der Treibriemen aus einem elastischen Material gefertigt sein.

Alternativ zu einem elastischen Treibriemen kann auch eine ortsfest, federnd gelagerte Spannrolle an einem wenig dehnbaren Treibriemen angreifen. Im quasistationären Betriebszustand, d.h. während des Teleskopierens der Stützwinde wird über die federnd gelagerte Spannrolle eine Vorspannkraft auf den Treibriemen aufgebracht. Im Falle des Erreichens eines Anschlags der Stützwinde wird die Spannrolle von dem Treibriemen zurückgedrückt und dämpft somit die stoßartige Belastung.

Bei einer weiteren vorteilhaften Ausführungsform weist die Rutschkupplung ein mit einer Innenverzahnung auf der Antriebswelle angeordnetes Antriebszahnrad auf, welches ein komplementär mit einer Außenverzahnung auf der Verbindungswelle angeordnetes Abtriebszahnrad kämmt, wobei das Antriebszahnrad und/oder das Abtriebszahnrad kraftschlüssig mit einem vorgebbaren Reibwert auf der Antriebswelle oder Abtriebswelle befestigt ist. Bei einer stoßartigen Belastung rutscht nunmehr mindestens eines der Zahnräder in Umfangsrichtung auf seiner Welle und verhindert dadurch eine Übertragung des Stoßes in den Motor.

Als besonders günstig hat sich gezeigt, die Antriebswelle als Hohlwelle auszubilden. Daraus resultiert der Vorteil, daß die üblicherweise verwendete Verbindungswelle durch die als Hohlwelle ausgebildete Antriebswelle hindurchgesteckt und dadurch bedingt weiter benutzt werden kann.

Die Hohlwelle kann einen kreisförmigen Querschnitt aufweisen. Dieses vereinfacht wiederum die motorseitige Kraftübertragung auf die Antriebswelle.

Vorzugsweise ist der Motor nicht selbsthemmend, d.h. die Stützwinde kann beispielsweise bei Stromausfall oder anderen Störungen des Motors wie bisher mittels einer Handkurbel verfahren werden.

Günstigerweise umfasst der Motor einen Elektmmotor, Dieser ist kostengünstig, wartungsarm, kompaktbauend und einfach mit Hilfe eines Stromkabels unabhängig von einer Druckluftversorgung anzuschließen.

Vorteilhafterweise ist der Motor für ein Drehmoment von 5 bis 15 Nm ausgelegt.

Anhand der nachfolgenden Zeichnungsfiguren wird die Erfindung beispielhaft näher erläutert. Es zeigen die
- Fig. 1: eine schematische Hinteransicht einer Anordnung eines Motors auf der Verbindungswelle mit ortsfester Abstützung zu einer Stützwinde;
- Fig. 2: eine Teilansicht einer elastischen Abstützung des Motors an einer Stützwinde;
- Fig. 3: eine perspektivische Ansicht einer elastischen Abstützung des Motors an dem Auflieger;
- Fig. 4: eine Hinteransicht einer Abstützung gemäß Fig. 3;
- Fig. 5: einen Längsschnitt durch den Motor mit Antriebswelle, Elastikhülse und Verbindungswelle;
- Fig. 6: einen Querschnitt durch eine Luftkammerhülse; und
- Fig. 7: eine schematische Seitenansicht eines Riementriebs.

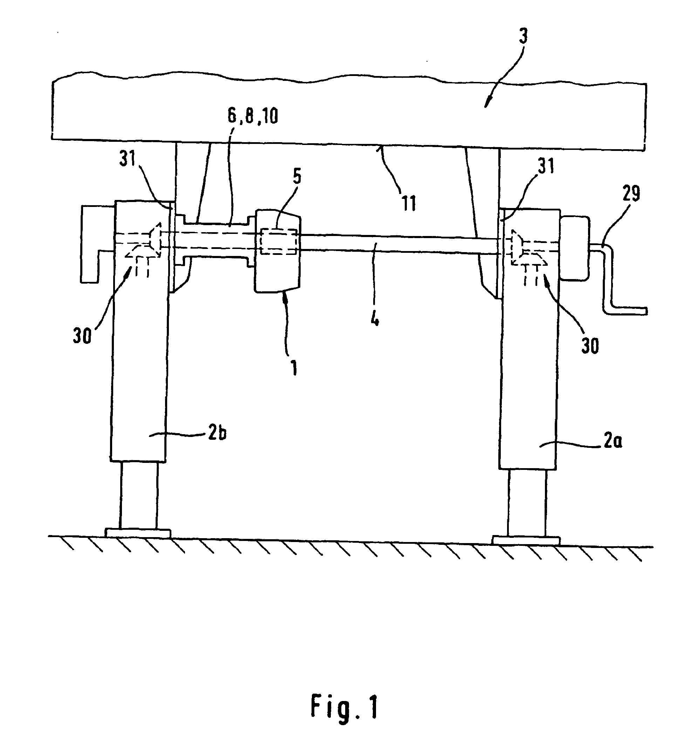

Die Figur 1 zeigt paarweise an einem Auflieger 3 angeordnete Stützwinden 2a, 2b, die in ihrem ausgefahrenen Zustand den Boden berühren. An der Stützwinde 2a ist eine Handkurbel 29 zu erkennen, mit welcher bei einem Ausfall des Motors 1 die Stützwinden 2a, 2b verfahren werden können. Die Stützwinden 2a, 2b sind über eine Stützwindengegenplatte 31 an den Auflieger 3 geschraubt. In beiden Stützwinden 2a, 2b ist jeweils ein Stützwindengetriebe angeordnet.

Der Motor 1 ist auf der die beiden Stützwinden 2a, 2b, miteinander verbindenden Verbindungswelle 4 angeordnet und umschließt mit seiner Antriebswelle 5 die Verbindungswelle 4 drehfest. Über ein Federelement 6, was im vorliegenden Fall als Torsionselement 8 ausgebildet ist, ist der Motor 1 elastisch mit der Stützwinde 2b verbunden und gleichzeitig gegen Mitdrehen gesichert. Das Torsionselement kann auch als elastischer Schlauch 10 oder elastisches Rohr ausgeführt sein.

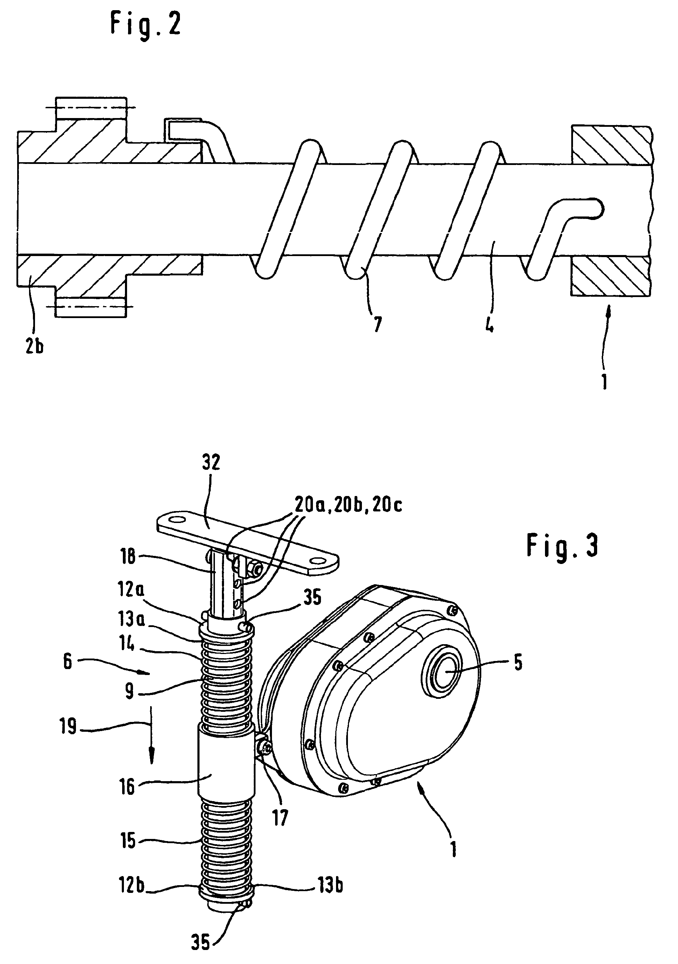

In der Figur 2 ist der Motor 1 anstelle eines Torsionselementes 8 mit einer Spiralfeder 7 mit der Stützwinde 2b elastisch verbunden. Dabei verläuft mittig durch die Spiralfeder 7 die Verbindungswelle 4.

Die Figur 3 zeigt perspektivisch eine alternative Ausführungsform, bei der sich der Motor 1 mit einem Federelement 6 an der Unterseite eines Aufliegerbodens 11 (siehe Figur 1) abstützt.

In einem mittleren Bereich des Motors 1 ragt beidseitig die drehbare Antriebswelle 5 hervor.

Die Abstützung des Motors 1 erfolgt über den Anschlagpunkt 17 und die Befestigungshülse 16, welche wiederum zwischen der oberen Teilfeder 14 und der unteren Teilfeder 15 eingespannt ist. Die Teilfedern 14, 15 sind jeweils auf ein Führungsrohr 9 aufgeschoben und an ihrem äußeren Ende 13a, 13b mittels Endanschlägen 12a, 12b ortsfest angebracht.

Damit das Federelement 6 an baulich unterschiedlichen Aufliegern angebracht werden kann, ist das Führungsrohr 9 in axialer Richtung 19 verschiebbar angebracht. Hierzu werden die Einstellbolzen 35 herausgezogen, das Führungsrohr 9 und die Teilfedem 14,15 sowie die Befestigungshülse 16 gegenüber dem mit der Befestigungsplatte 32 an der Unterseite des Aufliegers (nicht eingezeichnet) befestigbaren Innenrohr 18 verschoben und die Einstellbolzen 35 in der gewünschten Position, beispielsweise in einer der sichtbaren unterschiedlichen Positionen 20a, 20b, 20c, eingeschoben. Somit lässt sich die Stellung des Motors 1 an eine vorgegebene Position der Verbindungswelle 4 anpassen, ohne dass das Federelement 6 sich in seinen elastischen Eigenschaften verändert.

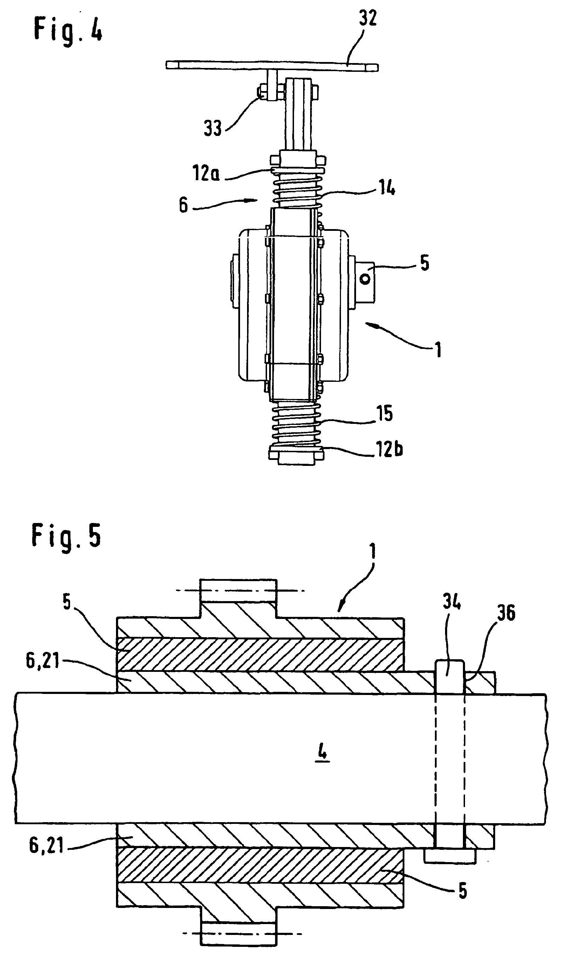

In der Figur 4 ist das Federelement 6 und der Motor 1 in einer Hinteransicht gezeigt, wobei die obere und untere Teilfeder 14, 15 durch den Motor 1 verdeckt sind. Das Federelement 6 ist mittels einer Schraubverbindung 33 mit der Anschraubplatte 32 verbunden.

Die Figur 5 zeigt einen Schnitt durch den Motor 1, wobei zwischen der Antriebswelle 5 und der Verbindungswelle 4 ein Federelement 6 in Form einer Elastikhülse 21 angeordnet ist. Die Elastikhülse 21 ist einseitig aus dem Motor 1 herausgeführt und weist eine durch die Elastikhülse 21 und die Verbindungswelle 4 verlaufende Bohrung 36 auf, durch welche ein Verbindungsbolzen 34 gesteckt ist. Mittels des Verbindungsbolzen 34 sind sowohl die Elastikhülse 21 als auch die Verbindungswelle 4 formschlüssig und damit verdrehsicher miteinander verbunden. Die Antriebswelle 5 ist stoffschlüssig, beispielsweise durch Verkleben, ebenfalls mit der Elastikhülse 21 verbunden.

Bei der Ausführungsform entsprechend Figur 5 kann der Motor 1 starr an der Unterseite des Aufliegerbodens 11 befestigt sein, da die Elastizität im Falle eines Fahrens der Stützwinde 2a, 2b, gegen ein Anschlag zwischen Antriebswelle 4 und Verbindungswelle 4 erfolgt.

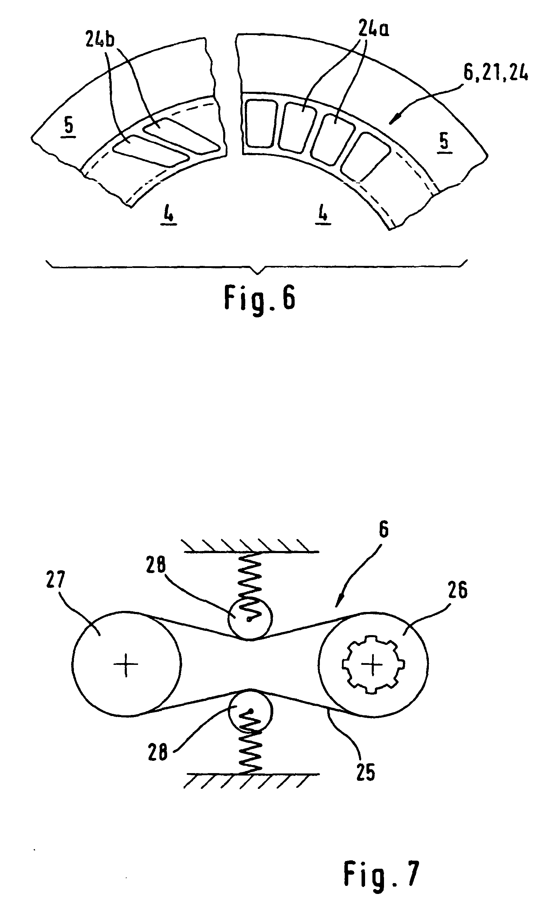

Die Figur 6 zeigt eine Luftkammerhülse 24 als besondere Form der Elastikhülse 21. Darüber befinden sich beispielhaft die Luftkammern 24a in einem entspannten Zustand, während die Luftkammern 24b unter Lastaufnahme dargestellt sind. Eingefügt ist die Luftkammerhülse 24 drehfest zwischen der Antriebswelle 5 und der Verbindungswelle 4.

Ein alternatives Federelement 6 ist in Figur 7 als Riemenantrieb 22 dargestellt. Hierbei treibt ein Antriebsrad 26 über einen Treibriemen 25 ein Abtriebsrad 27 an, wobei das Antriebsrad 26 drehfest mit der Antriebswelle 5 und das Abtriebsrad 27 drehfest mit der Verbindungswelle 4 verbunden ist.

Von außen greifen beidseitig Spannrollen 28 an den Treibriemen 24 und spannen diesen vor. Bei einem Teleskopieren der Stützwinde 2a, 2b gegen einen Anschlag drückt der Treibriemen 25 gegen eine der Spannrollen 28, wodurch der Kraftstoß abgefangen wird.

### Bezugszeichenliste

- 1: Motor
- 2a, b: Stützwinde
- 3: Auflieger
- 4: Verbindungswelle
- 5: Antriebswelle
- 6: Federelement
- 7: Spiralfeder
- 8: Torsionselement
- 9: Führungsrohr
- 10: elastischer Schlauch
- 11: Unterseite Aufliegerboden
- 12a, b: Endausschlag
- 13a, b: äußeres Ende der Teilfeder
- 14: obere Teilfeder
- 15: untere Teilfeder
- 16: Befestigungshülse
- 17: Anschlagpunkt
- 18: Innenrohr
- 19: axiale Richtung Führungsrohr
- 20a,b,c: unterschiedliche Positionen
- 21: Elastikhülse
- 22: Riemenantrieb
- 24: Luftkammerhülse
- 24 a,: Luftkammer ohne Torsionsbelastung
- 24 b: Luftkammer mit Torsionsbelastung
- 25: Treibriemen
- 26: Antriebsrad
- 27: Abtriebsrad
- 28: Spannrolle
- 29: Handkurbel
- 30: Stützwindengetriebe
- 31: Stützwindengegenplatte
- 32: Anschraubplatte
- 33: Schraubverbindung zur Anschraubplatte
- 34: Verbindungsbolzen
- 35: Einstellbolzen
- 36: Bohrung

## Patentansprüche

1. Anordnung eines Motors (1) an paarweise montierten Stützwinden (2a, 2b), insbesondere an einem Auflieger (3) eines Sattelzuges, wobei die Stützwinden (2a, 2b) über eine Verbindungswelle (4) miteinander verbunden und durch Inbetriebnahme des Motors (1) teleskopierbar sind, wobei der Motor (1) mit seiner Antriebswelle (5) an der Verbindungswelle (4) angreift und sich an einer relativ zum Motor (1) ortsfesten Komponente abstützt,
**dadurch gekennzeichnet,**
**dass** zwischen Motor (1) und ortsfester Komponente ein Federelement (6) angeordnet ist.

2. Anordnung nach Anspruch 1, **dadurch gekennzeichnet, dass** das Federelement (6) eine Spiralfeder (7), ein Torsionselement (8) oder einen Stoßdämpfer umfasst.

3. Anordnung nach Anspruch 2, **dadurch gekennzeichnet, dass** das Torsionselement (8) einen elastischen Schlauch (10) umfasst.

4. Anordnung nach Anspruch 2 oder 3, **dadurch gekennzeichnet, dass** die ortsfeste Komponente mindestens eine der beiden Stützwinden (2a, 2b) ist.

5. Anordnung nach Anspruch 4, **dadurch gekennzeichnet, dass** die Spiralfeder (7) oder das Torsionselement (8) drehfest an mindestens einer der Stützwinden (2a, 2b) und dem Motor (1) befestigt ist.

6. Anordnung nach Anspruch 4 oder 5, **dadurch gekennzeichnet, dass** die Spiralfeder (7) oder das Torsionselement (8) die Verbindungswelle (4) zumindest teilweise umgibt.

7. Anordnung nach einem der Ansprüche 3 bis 6, **dadurch gekennzeichnet, dass** die Verbindungswelle (4) berührungslos innerhalb der Spiralfeder (7) oder des Torsionselementes (8) angeordnet ist.

8. Anordnung nach Anspruch 1 oder 2, **dadurch gekennzeichnet, dass** die ortsfeste Komponente die Unterseite eines Aufliegerbodens (11) ist.

9. Anordnung nach Anspruch 8, **dadurch gekennzeichnet, dass** die Spiralfeder (7) oder der Stoßdämpfer zwischen dem Motor (1) und der Unterseite des Aufliegerbodens (11) angeordnet ist.

10. Anordnung nach Anspruch 9, **dadurch gekennzeichnet, dass** die Spiralfeder (7) eine obere (14) und eine untere (15) auf einem Führungsrohr (9) angeordnete und durch jeweils einen Endanschlag (12a, 12b) an ihrem äußeren Ende (13a, 13b) fixierbare Teilfeder (14, 15) umfasst, wobei auf dem Führungsrohr (9) zwischen der oberen und unteren Teilfeder (14, 15) eine Befestigungshülse (16) angeordnet ist.

11. Anordnung nach Anspruch 10, **dadurch gekennzeichnet, dass** die Befestigungshülse (16) oder der Gasdruckdämpfer mit dem Motor (1) in einem Anschlagpunkt (17) verbunden ist.

12. Anordnung nach Anspruch 10 oder 11, **dadurch gekennzeichnet, dass** das Führungsrohr (9) auf ein Innenrohr (18) aufgeschoben und mit diesem in axialer Richtung (19) in unterschiedlichen Positionen (20a, 20b, 20c) verbindbar ist.

13. Anordnung nach einem der Ansprüche 1 bis 12, **dadurch gekennzeichnet, dass** die Verbindungswelle (4) drehfest an der Antriebswelle (5) befestigt ist.

14. Anordnung eines Motors (1) an paarweise montierten Stützwinden (2a, 2b), insbesondere an einem Auflieger (3) eines Sattelzuges, wobei die Stützwinden (2a, 2b) über eine Verbindungswelle (4) miteinander verbunden und durch Inbetriebnahme des Motors (1) teleskopierbar sind, wobei der Motor (1) mit seiner Antriebswelle (5) an der Verbindungswelle (4) angreift und sich an einer relativ zum Motor (1) ortsfesten Komponente abstützt,
**dadurch gekennzeichnet,**
**dass** zwischen Antriebswelle (5) und Verbindungswelle (4) ein Federelement (6) angeordnet ist.

15. Anordnung nach Anspruch 14, **dadurch gekennzeichnet, dass** das Federelement (6) eine Elastikhülse (21), einen Riementrieb (22) oder eine Rutschkupplung umfasst.

16. Anordnung nach Anspruch 15, **dadurch gekennzeichnet, dass** die Elastikhülse (21) als Luftkammerhülse (24) ausgebildet ist.

17. Anordnung nach einem der Ansprüche 14 bis 16, **dadurch gekennzeichnet, dass** die ortsfeste Komponente mindestens eine der Stützwinden (2a, 2b), einen Aufliegerboden oder einen Fahrzeugträger umfasst, wobei die ortsfeste Komponente starr mit dem Motor (1) verbunden ist.

18. Anordnung nach einem der Ansprüche 15 bis 17, **dadurch gekennzeichnet, dass** die Elastikhülse (21) drehfest an der Verbindungswelle (4) und der Antriebswelle (5) befestigt ist.

19. Anordnung nach einem der Ansprüche 15 bis 17, **dadurch gekennzeichnet, dass** der Riementrieb (22) einen Treibriemen (25) umfasst, welcher ein auf der Antriebswelle (5) drehfest angeordnetes Antriebsrad (26) und ein auf der Verbindungswelle (4) drehfest angeordnetes Abtriebsrad (27) umschlingt.

20. Anordnung nach Anspruch 19, **dadurch gekennzeichnet, dass** der Treibriemen (25) aus einem elastischen Material gefertigt ist.

21. Anordnung nach Anspruch 19 oder 20, **dadurch gekennzeichnet, dass** eine ortsfest, federnd gelagerte Spannrolle (28) an den Treibriemen (25) angreift.

22. Anordnung nach einem der Ansprüche 15 bis 17, **dadurch gekennzeichnet, dass** die Rutschkupplung ein mit einer Innenverzahnung auf der Antriebswelle angeordnetes Antriebszahnrad aufweist, welches ein komplementär mit einer Außenverzahnung auf der Verbindungswelle angeordnetes Abtriebszahnrad kämmt, wobei das Antriebszahnrad und/oder das Abtriebszahnrad kraftschlüssig mit einem vorgebbaren Reibwert auf der Antriebswelle oder Abtriebswelle befestigt ist.

23. Anordnung nach einem der Ansprüche 1 bis 22, **dadurch gekennzeichnet, dass** die Antriebswelle (5) als Hohlwelle ausgebildet ist.

24. Anordnung nach Anspruch 23, **dadurch gekennzeichnet, dass** die Hohlwelle einen kreisförmigen Querschnitt aufweist.

25. Anordnung nach einem der Ansprüche 1 bis 24, **dadurch gekennzeichnet, dass** der Motor (1) nicht selbsthemmend ist.

26. Anordnung nach einem der Ansprüche 1 bis 25, **dadurch gekennzeichnet, dass** der Motor (1) einen Elektromotor umfasst.

27. Anordnung nach einem der Ansprüche 1 bis 26, **dadurch gekennzeichnet, dass** der Motor (i) für ein Drehmoment von 5 bis 15 Nm ausgelegt ist.

## Claims

1. Arrangement of a motor (1) on supporting winches (2a, 2b) mounted in pairs, in particular on a semitrailer (3) of a semitrailer train, the supporting winches (2a, 2b) being connected to one another via a connecting shaft (4), and it being possible for said supporting winches (2a, 2b) to be telescoped by starting operation of the motor (1), the motor (1) acting on the connecting shaft (4) with its input shaft (5) and being supported on a component which is stationary in relation to the motor (1), **characterized in that** a spring element (6) is arranged between the motor (1) and the stationary component.

2. Arrangement according to Claim 1, **characterized in that** the spring element (6) is a spiral spring (7), a torsion element (8) or a shock absorber.

3. Arrangement according to Claim 2, **characterized in that** the torsion element (8) comprises an elastic hose (10).

4. Arrangement according to Claim 2 or 3, **characterized in that** the stationary component is at least one of the two supporting winches (2a, 2b).

5. Arrangement according to Claim 4, **characterized in that** the spiral spring (7) or the torsion element (8) is fixed to at least one of the supporting winches (2a, 2b) and to the motor (1) such that it is fixed against rotation.

6. Arrangement according to Claim 4 or 5, **characterized in that** the spiral spring (7) or the torsion element (8) at least partially surrounds the connecting shaft (4).

7. Arrangement according to one of Claims 3 to 6, **characterized in that** the connecting shaft (4) is arranged in a contactless manner within the spiral spring (7) or the torsion element (8).

8. Arrangement according to Claim 1 or 2, **characterized in that** the stationary component is the underside of a semitrailer base (11).

9. Arrangement according to Claim 8, **characterized in that** the spiral spring (7) or the shock absorber is arranged between the motor (1) and the underside of the semitrailer base (11).

10. Arrangement according to Claim 9, **characterized in that** the spiral spring (7) comprises an upper spring element (14) and a lower spring element (15), which spring elements (14, 15) are arranged on a guide tube (9) and can be fixed at their outer ends (13a, 13b) by in each case one end stop (12a, 12b), a fixing sleeve (16) being arranged on the guide tube (9) between the upper and the lower spring elements (14, 15).

11. Arrangement according to Claim 10, **characterized in that** the fixing sleeve (16) or the gas pressure damper is connected to the motor (1) at a stop point (17).

12. Arrangement according to Claim 10 or 11, **characterized in that** the guide tube (9) is pushed onto an inner tube (18) and can be connected to this inner tube (18) in different positions (20a, 20b, 20c) in the axial direction (19).

13. Arrangement according to one of Claims 1 to 12, **characterized in that** the connecting shaft (4) is fixed to the input shaft (5) such that it is fixed against rotation.

14. Arrangement of a motor (1) on supporting winches (2a, 2b) mounted in pairs, in particular on a semitrailer (3) of a semitrailer train, the supporting winches (2a, 2b) being connected to one another via a connecting shaft (4), and it being possible for said supporting winches (2a, 2b) to be telescoped by starting operation of the motor (1), the motor (1) acting on the connecting shaft (4) with its input shaft (5) and being supported on a component which is stationary in relation to the motor (1), **characterized in that** a spring element (6) is arranged between the input shaft (5) and the connecting shaft (4).

15. Arrangement according to Claim 14, **characterized in that** the spring element (6) comprises an elastic sleeve (21), a belt drive (22) or a friction clutch.

16. Arrangement according to Claim 15, **characterized in that** the elastic sleeve (21) is in the form of an air-chamber sleeve (24).

17. Arrangement according to one of Claims 14 to 16, **characterized in that** the stationary component comprises at least one of the supporting winches (2a, 2b), a semitrailer base or a vehicle support, the stationary component being rigidly connected to the motor (1).

18. Arrangement according to one of Claims 15 to 17, **characterized in that** the elastic sleeve (21) is fixed to the connecting shaft (4) and the input shaft (5) such that it is fixed against rotation.

19. Arrangement according to one of Claims 15 to 17, **characterized in that** the belt drive (22) comprises a drive belt (25), which loops around an input gear (26), which is arranged on the input shaft (5) such that it is fixed against rotation, and an output gear (26), which is arranged on the connecting shaft (4) such that it is fixed against rotation.

20. Arrangement according to Claim 19, **characterized in that** the drive belt (25) is made from an elastic material.

21. Arrangement according to Claim 19 or 20, **characterized in that** a clamping roller (28), which is mounted in a resilient manner and such that it is stationary, acts on the drive belt (25).

22. Arrangement according to one of Claims 15 to 17, **characterized in that** the friction clutch has an input gear, which is arranged with an inner toothed section on the input shaft and meshes with an output gear arranged in complementary fashion with an outer toothed section on the connecting shaft, the input gear and/or the output gear being fixed in a force-fitting manner on the input shaft or output shaft with a predeterminable coefficient of friction.

23. Arrangement according to one of Claims 1 to 22, **characterized in that** the input shaft (5) is in the form of a hollow shaft.

24. Arrangement according to Claim 23, **characterized in that** the hollow shaft has a circular cross section.

25. Arrangement according to one of Claims 1 to 24, **characterized in that** the motor (1) is not self-locking.

26. Arrangement according to one of Claims 1 to 25, **characterized in that** the motor (1) comprises an electric motor.

27. Arrangement according to one of Claims 1 to 26, **characterized in that** the motor (1) is designed for a torque of from 5 to 15 Nm.

## Revendications

1. Disposition d'un moteur (1) sur des béquilles (2a, 2b) montées par paire, en particulier sur une semi-remorque (3) d'un train routier articulé où les béquilles (2a, 2b) sont reliées entre elles par un arbre de liaison (4) et sont télescopiques grâce à la mise en oeuvre du moteur (1), où l'arbre d'entraînement (5) du moteur (1) s'engage sur l'arbre de liaison (4) et où le moteur s'appuie sur un composant fixe par rapport au moteur (1), **caractérisée en ce qu'**un élément élastique (6) est disposé entre le moteur (1) et le composant fixe.

2. Disposition selon la revendication 1, **caractérisée en ce que** l'élément élastique (6) comprend un ressort en spirale (7), un élément de torsion (8) ou un amortisseur de choc.

3. Disposition selon la revendication 2, **caractérisée en ce que** l'élément de torsion (8) comprend un tuyau élastique (10).

4. Disposition selon la revendication 2 ou 3, **caractérisée en ce que** le composant fixe est au moins une des deux béquilles (2a, 2b).

5. Disposition selon la revendication 4, **caractérisée en ce que** le ressort en spirale (7) ou l'élément de torsion (8) est fixé de manière solidaire en rotation sur au moins une des deux béquilles (2a, 2b) et le moteur (1).

6. Disposition selon la revendication 4 ou 5, **caractérisée en ce que** le ressort en spirale (7) ou l'élément de torsion (8) entoure, au moins partiellement, l'arbre de liaison (4).

7. Disposition selon l'une quelconque des revendications 3 à 6, **caractérisée en ce que** l'arbre de liaison (4) est disposé sans contact à l'intérieur du ressort en spirale (7) ou de l'élément de torsion (8).

8. Disposition selon la revendication 1 ou 2, **caractérisée en ce que** le composant fixe est la face inférieure d'un plancher de semi-remorque (11).

9. Disposition selon la revendication 8, **caractérisée en ce que** le ressort en spirale (7) ou l'amortisseur de choc est disposé entre le moteur (1) et la face inférieure du plancher de semi-remorque (11).

10. Disposition selon la revendication 9, **caractérisée en ce que** le ressort en spirale (7) comprend des ressorts partiels supérieur (14) et inférieur (15) disposés sur un tube de guidage (9) et pouvant être fixés à leur extrémité extérieure (13a, 13b) par une butée terminale (12a, 12b), une douille de fixation (16) étant disposée sur le tube de guidage (9) entre les ressorts partiels supérieur et inférieur (14, 15).

11. Disposition selon la revendication 10, **caractérisée en ce que** la douille de fixation (16) ou l'amortisseur à gaz est relié au moteur (1) en un point de butée (17).

12. Disposition selon la revendication 10 ou 11, **caractérisée en ce que** le tube de guidage (9) est enfilé sur un tube intérieur (18) et peut être relié à celui-ci dans différentes positions (20a, 20b, 20c) dans la direction axiale (19).

13. Disposition selon l'une quelconque des revendications 1 à 12, **caractérisée en ce que** l'arbre de liaison (4) est fixé de manière solidaire en rotation sur l'arbre d'entraînement (5).

14. Disposition d'un moteur (1) sur des béquilles (2a, 2b) montées par paire, en particulier sur une semi-remorque (3) d'un train routier articulé où les béquilles (2a, 2b) sont reliées entre elles par un arbre de liaison (4) et sont télescopiques grâce à la mise en oeuvre du moteur (1), où l'arbre d'entraînement (5) du moteur (1) s'engage sur l'arbre de liaison (4) et où le moteur s'appuie sur un composant fixe par rapport au moteur (1), **caractérisée en ce qu'**un élément élastique (6) est disposé entre l'arbre d'entraînement (5) et l'arbre de liaison (4).

15. Disposition selon la revendication 14, **caractérisée en ce que** l'élément élastique (6) comprend une douille élastique (21), un entraînement par courroie (22) ou un accouplement à friction.

16. Disposition selon la revendication 15, **caractérisée en ce que** la douille élastique (21) est réalisée sous la forme d'une douille à chambres à air (24).

17. Disposition selon l'une quelconque des revendications 14 à 16, **caractérisée en ce que** le composant fixe comprend au moins une des béquilles (2a, 2b), un plancher de semi-remorque ou un longeron, le composant fixe étant relié rigidement au moteur (1).

18. Disposition selon l'une quelconque des revendications 15 à 17, **caractérisée en ce que** la douille élastique (21) est reliée de manière solidaire en rotation sur l'arbre de liaison (4) et sur l'arbre d'entraînement (5).

19. Disposition selon l'une quelconque des revendications 15 à 17, **caractérisée en ce que** l'entraînement par courroie (22) comprend une courroie d'entraînement (25) laquelle s'enroule autour d'une poulie menante (26) disposée sur l'arbre d'entraînement (5) de manière solidaire en rotation et autour d'une poulie menée (27) disposée sur l'arbre de liaison (4) de manière solidaire en rotation.

20. Disposition selon la revendication 19, **caractérisée en ce que** la courroie d'entraînement (25) est constituée d'un matériau élastique.

21. Disposition selon la revendication 19 ou 20, **caractérisée en ce qu'**un galet tendeur (28) sur palier fixe et monté sur ressort appuie sur la courroie d'entraînement (25).

22. Disposition selon l'une quelconque des revendications 15 à 17, **caractérisée en ce que** l'accouplement à friction présente un pignon menant disposé sur l'arbre d'entraînement, lequel s'engrène avec un pignon mené disposé sur l'arbre de liaison et muni d'une denture extérieure complémentaire, le pignon menant et/ou le pignon mené étant fixé(s) sur l'arbre d'entraînement ou sur l'arbre de liaison, grâce à un assemblage par force avec un coefficient de frottement pouvant être prédéterminé.

23. Disposition selon l'une quelconque des revendications 1 à 22, **caractérisée en ce que** l'arbre d'entraînement (5) est réalisé sous la forme d'un arbre creux.

24. Disposition selon la revendication 23, **caractérisée en ce que** l'arbre creux présente une section transversale cruciforme.

25. Disposition selon l'une quelconque des revendications 1 à 24, **caractérisée en ce que** le moteur (1) n'est pas autobloquant.

26. Disposition selon l'une quelconque des revendications 1 à 25, **caractérisée en ce que** le moteur (1) comprend un moteur électrique.

27. Disposition selon l'une quelconque des revendications 1 à 26, **caractérisée en ce que** le moteur (7) est dimensionné pour offrir un couple de rotation de 5 à 15 Nm.
